# FASCICULE DE BREVET EUROPEEN

(11) **EP 3 610 176 B1**
(45) Date de publication et mention de la délivrance du brevet: **01.06.2022**
(21) Numéro de dépôt: 18718896.6
(22) Date de dépôt: 05.04.2018
(51) Int. Cl.: F16H 57/04

(54) **ENSEMBLE COMPRENANT UN TRAIN D'ENGRENAGES EPICYCLOÏDAL**
ANORDNUNG MIT EINEM PLANETENRADSATZ
ASSEMBLY COMPRISING A PLANETARY GEARSET

(30) Priorité: 14.04.2017 FR 1753298
(43) Date de publication de la demande: 19.02.2020
(73) Titulaire: Safran Transmission Systems, 92700 Colombes (FR)
(72) Inventeur: MORREALE, Serge, René, 77550 Moissy-Crayamel (FR); CATY, Fabien, Roger, Gaston, 77550 Moissy-Crayamel (FR); GEDIN, Patrice, Jocelyn, Francis, 77550 Moissy-Crayamel (FR)
(74) Mandataire: Ernest Gutmann - Yves Plasseraud S.A.S.
(86) Numéro de dépôt international: PCT/FR2018/050852
(87) Numéro de publication internationale: WO 2018/189457

(56) Documents cités:
- FR-A1- 3 041 054
- US-A1- 2013 225 353

## Description

Le domaine de la présente invention est celui des turbomachines et plus particulièrement des trains d'engrenages épicycloïdaux et parmi les trains épicycloïdaux plus spécifiquement les réducteurs épicycloïdaux et les transmissions différentielles.

De façon classique, un réducteur à train d'engrenages épicycloïdal comprend un pignon planétaire ou pignon central, une couronne planétaire ou couronne extérieure et des pignons satellites qui sont en prise avec le pignon planétaire et avec la couronne, le support de l'un de ces trois composants devant être bloqué en rotation pour le fonctionnement du train d'engrenages. Lorsque le porte-satellites est fixe en rotation, le pignon central et la couronne sont menant et mené, respectivement, ou inversement. La lubrification et le refroidissement des engrènements et des axes des pignons satellites ne posent alors aucun problème et sont assurés par des gicleurs qui sont fixes en rotation et qui peuvent projeter de l'huile en permanence sur les zones d'engrènement des pignons satellites avec le pignon central et avec la couronne et sur les axes des pignons satellites.

Toutefois, dans le cas le plus fréquent, la couronne extérieure est fixe en rotation et le pignon central et le porte-satellites sont menant et mené, respectivement. Ce type de montage est préféré dans les cas où un rapport de réduction supérieur à trois est souhaité puisqu'il s'avère moins encombrant. La lubrification des zones d'engrènement et des axes des pignons satellites pose alors un problème qui est résolu dans la technique actuelle par des réseaux complexes de conduits de cheminement d'huile sous pression, utilisant des joints dynamiques ou joints tournants qui sont soumis à une usure et qu'il faut vérifier et changer régulièrement.

Ainsi, la déposante a proposé dans une première configuration décrite dans sa demande WO2010092263 un dispositif de lubrification dans lequel un injecteur fixe fait gicler de l'huile dans une coupelle annulaire solidaire d'un porte-satellites, l'huile étant ainsi récupérée par centrifugation et dirigée par la suite vers des moyens de lubrification des pignons. Ce dispositif évite l'utilisation des joints dynamiques ou tournants, ce qui améliore la fiabilité du système de lubrification du réducteur ainsi que sa maintenance.

Dans une seconde configuration connue, le gicleur peut être porté par l'arbre portant le pignon central de sorte à avoir son jet d'huile orienté en direction de la coupelle.

Toutefois, dans l'une et l'autre des deux configurations précitées, il est nécessaire d'avoir suffisamment de place pour pouvoir agencer le gicleur fixe ou le gicleur porté par l'arbre de manière à ce qu'il puisse projeter l'huile directement vers la coupelle. Or, dans les turbomachines à faible diamètre, l'espace radial entre la périphérie radialement interne de la coupelle et l'arbre est trop faible pour envisager le montage selon l'une ou l'autre des configurations.

Un autre exemple d'un tel dispositif est connu du document US 2013/225353.

L'invention a notamment pour but d'apporter une solution simple, efficace et économique aux problèmes de l'art antérieur décrit précédemment.

A cet effet, elle propose un ensemble comprenant un train d'engrenages épicycloïdal comportant un pignon central, une couronne extérieure et des pignons satellites en prise avec le pignon central et avec la couronne extérieure et montés chacun libre en rotation sur un porte-satellites, le pignon central entourant et étant solidaire en rotation d'un arbre et le train d'engrenages comprenant des moyens de lubrification des dentures et des axes des pignons satellites, ces moyens comportant une coupelle annulaire solidaire du porte-satellites ouverte radialement vers l'intérieur, caractérisé en ce qu'il comprend des moyens fixes de projection d'huile configurés pour projeter de l'huile directement vers des moyens de déviation de l'huile aptes à dévier vers l'intérieur de la coupelle annulaire, les moyens de déviation étant solidaires de l'arbre.

Selon l'invention, l'huile n'est plus projetée directement vers la coupelle mais vers des moyens de déviation aptes à dévier l'huile vers la coupelle. Lorsque l'arbre est un arbre d'entrée tel qu'un arbre de turbine, sa vitesse est supérieure à celle du porte-satellites qui forme une sortie du train d'engrenages. La projection d'huile vers les moyens de déviation permet une centrifugation initiale de l'huile sur l'arbre, ce qui augmente sa pression par rapport à la technique antérieure. Il s'ensuit une meilleure circulation d'huile dans le porte-satellites.

Les moyens de déviation sont ainsi solidaires de l'arbre auquel est solidarisé le pignon central. Ils peuvent dans une réalisation être formés sur l'arbre.

Les moyens de déviation peuvent par exemple comprendre une paroi annulaire formée en saillie radialement vers l'extérieur sur l'arbre. Cette paroi peut, par exemple, avoir une face d'impact d'huile qui est inclinée concave de manière à limiter les projections parasites d'huile.

L'invention est par exemple applicable à un train d'engrenage, tel qu'un train d'engrenage dans lequel la couronne extérieure est fixe. Dans ce cas, le train d'engrenages peut être qualifié de réducteur puisque la vitesse de sortie, c'est-à-dire celle du porte-satellites est plus faible que la vitesse d'entrée, c'est-à-dire celle de l'arbre d'entrainement en rotation du pignon central. L'invention concerne également un train d'engrenage à transmission différentielle, dans lequel le porte-satellite et la couronne extérieure sont mobiles en rotation dans des sens opposés, le porte-satellites entrainant en rotation préférentiellement une première roue de soufflante amont et la couronne extérieure entrainant préférentiellement une seconde roue de soufflante aval. Avec un tel agencement, on obtient un montage à double soufflantes contrarotatives.

La paroi annulaire est positionnée sensiblement axialement le long de l'arbre de manière ce qu'un plan radial passant par la coupelle intercepte la paroi de déviation. Elle peut être formée par une simple nervure annulaire à section en V dont le sommet pointe radialement vers l'extérieur.

La coupelle peut comprendre une paroi annulaire radiale amont et une paroi annulaire radiale aval dont l'une est intercalée axialement entre les moyens de projection d'huile et les moyens de déviation d'huile lesquels comprennent au moins un gicleur apte à projeter de d'huile sur l'arbre, dans une zone agencée axialement entre les moyens de déviation et ladite paroi annulaire intercalée axialement entre les moyens de projection d'huile et les moyens de déviation d'huile.

De cette manière, l'huile impacte en premier l'arbre puis est ensuite orientée par les moyens de déviation en direction de la coupelle.

Les moyens de projection d'huile peuvent également comprendre au moins un gicleur dont le jet d'huile comprend une composante tangentielle orientée dans le sens de rotation de l'arbre. Ainsi, l'huile sortant d'un tel gicleur impacte l'arbre avec une vitesse tangentielle non nulle ce qui permet de réduire les éclaboussures d'huile.

L'invention concerne également une turbomachine comprenant un ensemble dans lequel le train d'engrenages est monté dans une enceinte annulaire formée radialement à l'intérieur d'un compresseur basse pression, le porte-satellites étant relié à une roue de soufflante amont et l'arbre étant un arbre du compresseur basse pression. Dans une configuration particulière, la couronne extérieure est solidaire d'une paroi annulaire définissant intérieurement une veine annulaire d'écoulement d'un flux d'air primaire, le train d'engrenages pouvant alors être qualifié de réducteur puisqu'il permet de réduire la vitesse de rotation du porte-satellites par rapport à la vitesse du pignon central.

Le train d'engrenages est, de préférence, intercalé axialement entre un palier amont et un palier aval portés par une structure statorique du compresseur basse pression, le palier amont guidant en rotation un arbre de liaison de la roue de soufflante au porte-satellites et le palier aval guidant en rotation l'arbre du compresseur basse pression.

L'invention sera mieux comprise et d'autres détails, avantages et caractéristiques de l'invention apparaîtront à la lecture de la description suivante faite à titre d'exemple non limitatif, en référence aux dessins annexés dans lesquels :

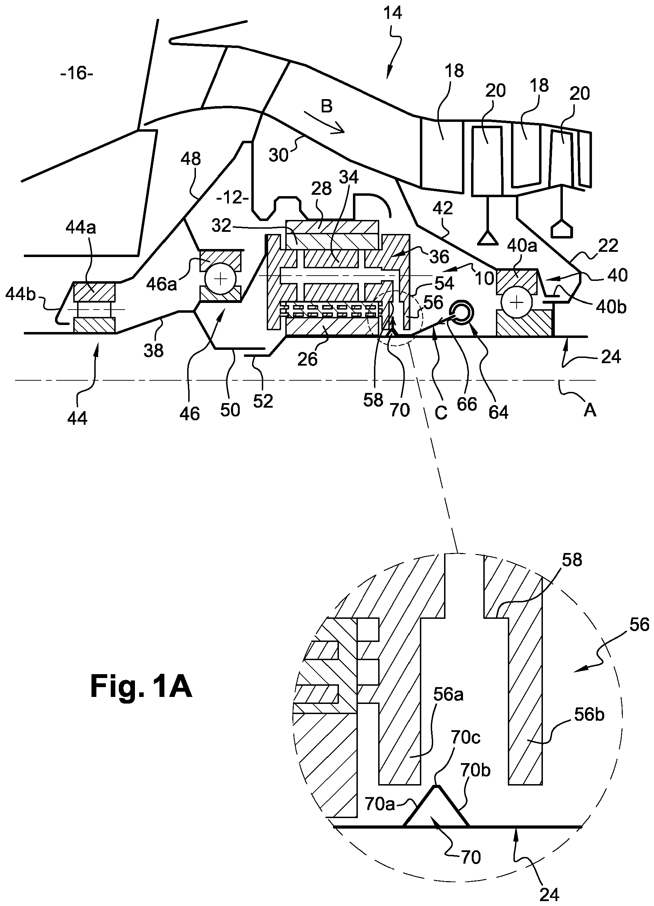

- la figure 1A qui est une demi-vue schématique en coupe axiale d'un réducteur à train d'engrenages épicycloïdal dans une turbomachine selon l'invention ;

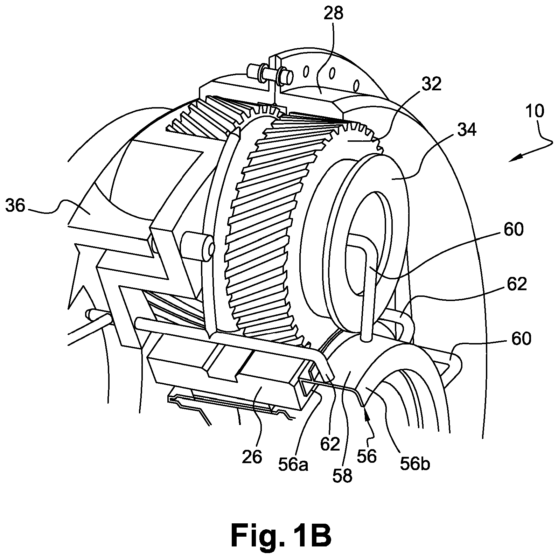

- la figure 1B est une vue schématique en perspective tronquée du réducteur à train d'engrenages et des moyens de lubrification des satellites.

On se réfère tout d'abord à la figure 1A qui représente schématiquement un réducteur 10, selon l'invention, à train d'engrenages épicycloïdal monté dans une turbomachine telle qu'un turboréacteur d'avion. Plus précisément, le train d'engrenages 10 est monté dans une enceinte annulaire 12 formée radialement à l'intérieur d'un compresseur basse pression 14 qui est agencé en aval d'une roue de soufflante 16 et en amont d'un compresseur haute pression (non représenté). Le compresseur basse pression 14 comprend une pluralité de rangées d'aubes fixes 18 et de rangées annulaires d'aubes mobiles 20 disposées axialement, le long de l'axe A, en alternance. Les rangées d'aubes mobiles 20 sont reliées par une paroi annulaire 22 à un arbre 24 basse pression entrainant également en rotation les aubes d'une turbine basse pression aval (non représentée).

Le réducteur à train d'engrenages 10 comprend un pignon central 26 ou pignon planétaire entourant l'extrémité amont de l'arbre 24 du compresseur basse pression et solidaire de celui-ci, une couronne externe 28 ou couronne planétaire entourant le pignon central 26 et reliée fixement à une paroi annulaire 30 définissant intérieurement la veine annulaire d'écoulement du flux d'air primaire (flèche B) circulant dans le compresseur basse pression 14. Le réducteur 10 comprend encore des pignons satellites 32 qui sont en prise par leurs dentures avec des dentures du pignon central 26 et de la couronne externe 28. Ces pignons satellites 32 sont montés libres en rotation sur des axes 34 d'un porte-satellites 36 dont l'extrémité amont est reliée par un arbre de liaison 38 à la roue de soufflante 16.

L'arbre 24 du compresseur basse-pression 14 est porté et guidé en rotation par un palier aval 40 à roulement à billes dont la bague externe 40a est solidaire d'une première partie statorique 42 du compresseur basse pression 14 reliée extérieurement à la paroi annulaire interne 30 de la veine d'air primaire. L'arbre de liaison 38 est porté et guidé en rotation par deux paliers 44, 46 agencés en amont du réducteur 10 dont un premier palier 44 qui est agencé en amont d'un second palier 46 est un palier à roulement à rouleaux, le second palier 46 étant un palier à roulement à billes. Les bagues externes 44a, 46a des premier et second paliers de roulement sont portées par une seconde partie statorique 48 du compresseur basse pression reliée extérieurement à la paroi annulaire interne 30 de la veine d'air primaire.

L'enceinte annulaire 12 de logement du réducteur 10 à train d'engrenages épicycloïdal est ainsi délimitée radialement vers l'intérieur par l'arbre 24 du compresseur basse pression 14, radialement vers l'extérieur par les première 42 et seconde 48 parties statoriques et la paroi annulaire interne 30 de la veine d'air primaire, à l'amont par le premier palier amont 44 et à l'aval par le palier aval 40. On note que l'arbre de liaison 38 comprend également une paroi annulaire 50 coopérant à étanchéité avec l'extrémité amont 52 de l'arbre 24 du compresseur basse pression 14 pour éviter les fuites d'huile de lubrification à cet endroit. De même, pour limiter les fuites d'huile, la bague externe 44a du premier palier 44 amont et la bague externe 40a du palier aval 40 comprennent chacune une portion annulaire 44b, 40b coopérant à étanchéité avec l'arbre de liaison 38 et l'arbre 24 du compresseur basse pression 10, respectivement.

La rotation des pignons satellites 32 dans les axes 34 du porte-satellites s'effectue par l'intermédiaire de paliers lisses.

Le réducteur 10 à train d'engrenages épicycloïdal comprend des moyens de lubrification par projection d'huile sur les dentures des pignons satellites 32 et leurs axes 34, ces moyens comprenant essentiellement un rouet 54 de réception de l'huile comportant une coupelle annulaire 56, plus particulièrement de forme circulaire. La coupelle 56 présente ici une section en U dont l'ouverture est orientée radialement vers l'intérieur, c'est-à-dire en direction de l'axe de rotation A. La coupelle 56 du rouet 54 comprend une paroi de fond 58 comportant des orifices dont certains sont reliés à des conduits d'alimentation 60 en huile des axes 34 des pignons satellites 32 et dont d'autres sont reliés à des conduits d'alimentation 62 en huile des zones de contact entre les dentures des pignons satellites 32 et la denture du pignon central 26 (figure 1B). La coupelle 56 comprend encore une paroi annulaire radiale amont 56a et une paroi annulaire radiale aval 56b reliées par la paroi de fond 58.

Selon l'invention, la turbomachine comprend des moyens fixes de projection d'huile comprenant une pluralité de gicleurs 66 d'huile répartis autour de l'axe A qui sont reliés à une pompe et un réservoir d'huile. Dans une réalisation de l'invention, les gicleurs d'huile 66 sont des orifices agencés sur un anneau 64 fixe entourant l'arbre 24 basse pression. Ces gicleurs 66 sont orientés de manière à ce que leurs jets d'huile (flèche C) projettent de l'huile en direction de moyens de déviation 70 de l'huile vers la coupelle 56.

Le diamètre du gicleur 66 doit être supérieur au diamètre maximum des particules susceptibles d'obturer les gicleurs. Le diamètre doit également être suffisamment grand pour assurer un débit d'huile d'alimentation de la coupelle 56 et suffisamment énergétique pour être rectiligne sur une distance d'environ 5 cm. Dans une réalisation pratique de l'invention, les moyens de projection d'huile sont configurés pour avoir une pression de sortie d'environ 1 bar dans les régimes les moins favorables comme le ralenti. Si on souhaite éloigner le gicleur 66 des moyens de déviation 70 il faut alors augmenter la pression de l'huile.

Les moyens de déviation 70 comprennent, dans l'exemple représenté en figure 1, une nervure 70 à section en V dont le sommet est orienté radialement vers l'extérieur, la nervure étant portée par la surface externe de l'arbre 24. Cette nervure 70 comprend une paroi annulaire amont 70a et une paroi annulaire aval 70b inclinées en oblique et se joignant l'une à l'autre au niveau d'une arête annulaire 70c. La paroi de déviation est ainsi formée par la paroi annulaire aval 70b et positionnée le long de l'arbre 24 au droit de la coupelle annulaire 56. Plus spécifiquement, la nervure annulaire 70 est positionnée axialement le long de l'arbre 24 de manière à ce qu'un plan radial passant par la coupelle 56, c'est-à-dire passant entre ses parois amont 56a et aval 56b intercepte la paroi de déviation 70b. La paroi de déviation 70b a de préférence une forme continue axialement, c'est-à-dire sans ressaut. Plus spécifiquement, le sommet 70c de la nervure 70, c'est-à-dire l'extrémité radialement externe de la paroi de déviation 70b, peut être positionné le long de l'arbre 24 de manière à être entre 30% et 60% de la distance séparant la paroi radiale amont 56a de la paroi radiale aval 56b, la paroi radiale amont 56a étant prise comme référence à 0%. Egalement, pour faciliter la récupération d'huile par la coupelle, l'extrémité radialement externe de la paroi de déviation 70b est conformée de manière à ce que la direction d'éjection d'huile passe entre les parois annulaires radiales amont 56a et aval 56b. Pour cela, la tangente à la paroi de déviation 70b au point d'éjection d'huile passe entre les parois annulaires radiales amont 56a et aval 56b.

Pour assurer une alimentation en huile optimale de la coupelle annulaire 56, les jets d'huile des gicleurs 66 doivent, de préférence, viser un point d'impact sur l'arbre 24 qui est situé axialement entre les deux bords de la coupelle 56, préférentiellement entre la nervure annulaire 70 et la paroi annulaire aval 56b de la coupelle annulaire 56. La direction d'un jet d'huile d'un gicleur 66 comprend donc une composante axiale non nulle dirigée du gicleur 66 vers la coupelle 56 et une composante radiale non nulle dirigée du gicleur 66 vers l'arbre 24.

En fonctionnement, les jets d'huile (flèche C) des gicleurs 66 envoient de l'huile vers la surface radialement externe de l'arbre 24, l'huile se dirigeant ensuite vers la paroi de déviation 70b qui dévie l'huile vers la coupelle annulaire 56, ce qui permet d'alimenter le rouet 54 en huile de lubrification malgré un faible espacement radial entre la coupelle annulaire 56 et l'arbre 24.

Dans une réalisation, la direction de chacun des jets des gicleurs 66 peut être entièrement comprise dans un plan contenant l'axe de rotation A de l'arbre 24. La direction des jets d'huile peut, de préférence comprendre une composante tangentielle non nulle dirigée dans un sens de rotation de l'arbre 24 afin de faciliter l'entrainement en rotation de l'huile. L'huile impactant l'arbre 24 a ainsi une vitesse tangentielle non nulle, ce qui permet de réduire la différence de vitesse tangentielle entre l'huile et l'arbre 24, limitant ainsi les éclaboussures.

Dans une configuration alternative de l'invention, on comprend que les jets d'huile pourraient impacter directement la surface de déviation 70b.

La paroi de déviation 70b qui est impactée par l'huile pourrait avoir une forme incurvée concave en direction longitudinale et/ou en direction transversale, optimisée pour permettre une bonne redirection de l'huile vers la coupelle annulaire 56 tout en limitant les projections parasites d'huile.

Dans le montage exposé ci-dessus, le pignon central 26 relié l'arbre 24 de la turbine basse pression tourne plus vite que le porte-satellites 36 portant la coupelle 56. La projection d'huile sur l'arbre 24 permet une centrifugation initiale de l'huile induisant une augmentation de la pression d'huile dans la coupelle 56 du porte-satellites 36 en comparaison de la pression d'huile atteignable si l'huile était projetée directement dans la coupelle 56. De plus, la projection d'huile sur l'arbre 24 permet d'imprimer à l'huile un mouvement de rotation dans le même sens que celui de la coupelle ce qui facilite l'écoulement de l'huile dans la coupelle annulaire. Il est donc possible d'avoir un dispositif de gavage d'huile dans un espace radial très réduit.

## Revendications

1. Ensemble comprenant un train d'engrenages épicycloïdal (10) comportant un pignon central (26), une couronne extérieure (28) et des pignons satellites (32) en prise avec le pignon central (26) et avec la couronne extérieure (28) et montés chacun libre en rotation sur un porte-satellites (36), le pignon central (26) entourant et étant solidaire en rotation d'un arbre (24) et le train d'engrenages comprenant des moyens de lubrification des dentures et des axes (34) des pignons satellites (32), ces moyens comportant une coupelle annulaire (56) solidaire du porte-satellites (36) ouverte radialement vers l'intérieur, **caractérisé en ce qu'**il comprend des moyens fixes (64) de projection d'huile configurés pour projeter de l'huile directement vers des moyens de déviation (70) aptes à dévier de l'huile vers l'intérieur de la coupelle annulaire (56), et **en ce que** les moyens de déviation sont solidaires de l'arbre.

2. Ensemble selon la revendication 1, **caractérisé en ce que** les moyens de déviation comprennent une paroi annulaire de déviation (70b) formée en saillie radialement vers l'extérieur sur l'arbre (24).

3. Ensemble selon la revendication 2, **caractérisé en ce que** la paroi annulaire de déviation (70b) est positionnée axialement le long de l'arbre (24) de manière ce qu'un plan radial passant par la coupelle intercepte la paroi annulaire de déviation (70b).

4. Ensemble selon la revendication 3, **caractérisé en ce que** la paroi annulaire de déviation est formée sur une nervure (70) à section en V dont le sommet pointe radialement vers l'extérieur.

5. Ensemble selon la revendication 4, **caractérisé en ce que** la nervure (70) comprend une paroi annulaire amont (70a) et une paroi annulaire aval formée par la paroi annulaire de déviation (70b), ces parois étant inclinées en oblique et se joignant l'une à l'autre au niveau d'une arête annulaire (70c).

6. Ensemble selon la revendication 5, **caractérisé en ce que** la paroi annulaire aval (70b) forme une paroi de déviation qui est positionnée le long de l'arbre (24) au droit de la coupelle annulaire (56).

7. Ensemble selon l'une des revendications 1 à 6, **caractérisé en ce que** la coupelle (56) comprend une paroi annulaire radiale amont (56a) et une paroi annulaire radiale aval (56b) dont l'une est intercalée axialement entre les moyens de projection d'huile et les moyens de déviation d'huile (70), les moyens de projection d'huile comprenant au moins un gicleur (66) apte à projeter de d'huile sur l'arbre, dans une zone agencée axialement entre les moyens de déviation (70) et ladite paroi annulaire (56b) intercalée axialement entre les moyens de projection d'huile (66) et les moyens de déviation (70) d'huile.

8. Ensemble selon les revendications 6 et 7, **caractérisé en ce que** la nervure annulaire (70) est positionnée axialement le long de l'arbre (24) de manière à ce qu'un plan radial passant par la coupelle (56), c'est-à-dire passant entre ses parois amont (56a) et aval (56b) intercepte la paroi annulaire aval (70b).

9. Ensemble selon la revendication 8, **caractérisé en ce que** le sommet (70c) de la nervure (70) est positionné le long de l'arbre (24) de manière à être entre 30% et 60% de la distance séparant la paroi annulaire radiale amont (56a) de la paroi annulaire radiale aval (56b) de la coupelle, la paroi radiale amont (56a) de la coupelle étant prise comme référence à 0%.

10. Ensemble selon l'une des revendications 1 à 9, **caractérisé en ce que** les moyens de projection (66) d'huile comprennent au moins un gicleur (66) dont le jet d'huile comprend une composante tangentielle orientée dans le sens de rotation de l'arbre (24).

11. Turbomachine comprenant un ensemble selon l'une des revendications 1 à 10 dans lequel le train d'engrenages est monté dans une enceinte annulaire (12) formée radialement à l'intérieur d'un compresseur basse pression (14), le porte-satellites (36) étant relié à une roue (16) de soufflante amont et l'arbre (24) étant un arbre du compresseur basse pression (14).

12. Turbomachine selon la revendication 11, **caractérisée en ce que** le train d'engrenages est intercalé axialement entre un palier amont (44, 46) et un palier aval (40) portés par une structure statorique du compresseur basse pression (14), le palier amont (44, 46) guidant en rotation un arbre de liaison (38) de la roue de soufflante (16) au porte-satellites (36) et le palier aval (40) guidant en rotation l'arbre (24) du compresseur basse pression (14).

## Patentansprüche

1. Anordnung mit einem Planetengetriebezug (10), enthaltend ein Sonnenrad (26), ein äußeres Hohlrad (28) und Planetenräder (32) aufweist, die mit dem Sonnenrad (26) und mit dem äußeren Hohlrad (28) in Eingriff stehen und jeweils frei drehbar auf einem Planetenträger (36) gelagert sind, wobei das Sonnenrad (26) eine Welle (24) umgibt und drehfest mit dieser verbunden ist und wobei der Getriebezug Mittel zur Schmierung der Verzahnungen und der Achsen (34) der Planetenräder (32) aufweist, wobei diese Mittel eine ringförmige Schale (56) aufweisen, die fest mit dem Planetenträger (36) verbunden ist und radial nach innen offen ist,
**dadurch gekennzeichnet, dass** sie feste Mittel (64) zum Aufspritzen von Öl aufweist, die dazu ausgelegt sind, Öl direkt auf Ablenkmittel (70) aufzuspritzen, die dazu geeignet sind, Öl zum Inneren der ringförmigen Schale (56) abzulenken, und dass die Ablenkmittel fest mit der Welle verbunden sind.

2. Anordnung nach Anspruch 1, **dadurch gekennzeichnet, dass** die Ablenkmittel eine ringförmige Ablenkwand (70b) aufweisen, die radial nach außen vorstehend an der Welle (24) ausgebildet ist.

3. Anordnung nach Anspruch 2, **dadurch gekennzeichnet, dass** die ringförmige Ablenkwand (70b) axial entlang der Welle (24) so positioniert ist, dass eine durch die Schale verlaufende Radialebene die ringförmige Ablenkwand (70b) schneidet.

4. Anordnung nach Anspruch 3, **dadurch gekennzeichnet, dass** die ringförmige Ablenkwand an einer Rippe (70) mit V-förmigem Querschnitt ausgebildet ist, deren Scheitelpunkt radial nach außen zeigt.

5. Anordnung nach Anspruch 4, **dadurch gekennzeichnet, dass** die Rippe (70) eine stromaufwärts gelegene Ringwand (70a) und eine aus der ringförmigen Ablenkwand (70b) gebildete stromabwärts gelegene Ringwand aufweist, wobei diese Wände schräg geneigt verlaufen und im Bereich einer Ringkante (70c) aufeinandertreffen.

6. Anordnung nach Anspruch 5, **dadurch gekennzeichnet, dass** die stromabwärts gelegene Ringwand (70b) eine Ablenkwand bildet, die entlang der Welle (24) im Bereich der ringförmigen Schale (56) positioniert ist.

7. Anordnung nach einem der Ansprüche 1 bis 6, **dadurch gekennzeichnet, dass** die Schale (56) eine stromaufwärts gelegene, radiale Wand (56a) und eine stromabwärts gelegene, radiale Wand (56b) aufweist, von denen die eine axial zwischen den Ölaufspritzmitteln und den Ölablenkmitteln (70) eingesetzt ist, wobei die Ölaufspritzmittel zumindest eine Düse (66) umfassen, die geeignet ist, Öl auf die Welle aufzuspritzen, und zwar in einem Bereich, der axial zwischen den Ablenkmitteln (70) und der ringförmigen Wand (56b) angeordnet ist, die axial zwischen den Ölaufspritzmitteln (66) und den Ölablenkmitteln (70) eingesetzt ist.

8. Anordnung nach den Ansprüchen 6 und 7, **dadurch gekennzeichnet, dass** die ringförmige Rippe (70) axial entlang der Welle (24) so positioniert ist, dass eine durch die Schale (56), d. h. zwischen ihrer stromaufwärts (56a) und ihrer stromabwärts gelegenen Wand, verlaufende Radialebene die stromabwärts gelegene Ringwand (70b) schneidet.

9. Anordnung nach Anspruch 8, **dadurch gekennzeichnet, dass** der Scheitelpunkt (70c) der Rippe (70) entlang der Welle (24) so positioniert ist, dass er zwischen 30 % und 60 % der Entfernung entspricht, welche die stromaufwärts gelegene, radiale Ringwand (56a) und die stromabwärts gelegene, radiale Ringwand (56b) der Schale trennt, wobei die stromaufwärts gelegene radiale Wand (56a) der Schale als 0 %-Bezugspunkt genommen wird.

10. Anordnung nach einem der Ansprüche 1 bis 9, **dadurch gekennzeichnet, dass** die Ölaufspritzmittel (66) mindestens eine Düse (66) umfassen, deren Ölstrahl eine in Drehrichtung der Welle (24) gerichtete tangentiale Komponente aufweist.

11. Turbomaschine mit einer Anordnung nach einem der Ansprüche 1 bis 10, wobei der Getriebezug in einem ringförmigen Gehäuse (12) gelagert ist, das radial innerhalb eines Niederdruckverdichters (14) ausgebildet ist, wobei der Planetenträger (36) mit einem stromaufwärts gelegenen Gebläserad (16) verbunden ist und die Welle (24) eine Welle des Niederdruckverdichters (14) ist.

12. Turbomaschine nach Anspruch 11, **dadurch gekennzeichnet, dass** der Getriebezug axial zwischen einem stromaufwärts gelegenen Lager (44, 46) und einem stromabwärts gelegenen Lager (40) eingesetzt ist, die von einer Statorstruktur des Niederdruckverdichters (14) getragen werden, wobei das stromaufwärts gelegene Lager (44, 46) eine Verbindungswelle (38) zum Verbinden des Gebläserads (16) mit dem Planetenträger (36) drehbar führt und das stromabwärts gelegene Lager (40) die Welle (24) des Niederdruckverdichters (14) drehbar führt.

## Claims

1. An assembly comprising an epicycloidal gear train (10) having a central pinion (26), an outer crown (28) and satellite pinions (32) in engagement with the central pinion (26) and the outer crown (28) and each mounted freely in rotation on a satellite carrier (36), the central pinion (26) surrounding and being rotationally fixed to a shaft (24) and the gear train comprising means for lubricating the teeth and axes (34) of the satellite pinions (32), these means comprising an annular cup (56) integral with the satellite carrier (36) opened radially inwardly, **characterized in that** it comprises fixed oil projection means (64) configured to project oil directly towards deflection means (70) able to deflect the oil towards the inside of the annular cup (56), and **in that** the means for deflecting are fixed to the shaft.

2. Assembly according to claim 1, **characterized in that** the deflection means comprise a deflection annular wall (70b) formed radially outwardly on the shaft (24).

3. Assembly according to claim 2, **characterized in that** the deflection annular wall (70b) is positioned axially along the shaft (24) so that a radial plane passing through the cup intercepts the deflection annular wall (70b).

4. Assembly according to claim 3, **characterized in that** the deflection annular wall is formed on a V-shaped rib (70) whose top points radially outward.

5. Assembly according to one of claims 4, **characterized in that** the rib (70) comprises an upstream radial annular wall (70a) and a downstream radial annular wall (70b), these walls being inclined obliquely and joining each other at an annular ridge (70c).

6. Assembly according to claim 5, **characterized in that** the downstream annular wall (70b) forms an annular deflection wall that is positioned along the shaft (24) perpendicularly to the annular cup (56).

7. Assembly according to one of claims 1 to 6, **characterized in that** the cup (56) comprises an upstream radial annular wall (56a) and a downstream radial annular wall (56b), one of which is axially interposed between the oil spraying means and the oil deflection means (70) which comprise at least one nozzle (66) adapted to spray oil onto the shaft, in an area axially arranged between the deflection means (70) and said annular wall (56b) axially interposed between the oil spraying means (66) and the oil deflection means (70).

8. Assembly according to claim 6 or 7, **characterized in that** the annular rib (70) is positioned axially along the shaft (24) so that a radial plane passing through the cup (56), that is, passing between its upstream (56a) and downstream (56b) walls, intercepts the deflection wall (70b).

9. Assembly according to claim 8, **characterized in that** the top (70c) of rib (70) is positioned along the shaft (24) so as to be between 30% and 60% of the distance separating the upstream radial wall (56a) from the downstream radial wall (56b), the upstream radial wall (56a) being taken as a reference at 0%.

10. Assembly according to one of claims 1 to 9, **characterized in that** the oil spraying means (66) comprise at least one nozzle (66) whose oil jet comprises a tangential component oriented in the direction of rotation of the shaft (24).

11. A turbomachine comprising an assembly according to one of claims 1 to 10 in which the gear train is mounted in an annular chamber (12) formed radially inside a low-pressure compressor (14), the satellite carrier (36) being connected to an upstream fan wheel (16) and the shaft (24) being a shaft of the low-pressure compressor (14).

12. A turbomachine according to claim 11, **characterized in that** the gear train is axially interposed between an upstream bearing (44, 46) and a downstream bearing (40) supported by a stator structure of the low-pressure compressor (14), the upstream bearing (44, 46) rotatably guiding a connecting shaft (38) from the fan wheel (16) to the satellite carrier (36) and the downstream bearing (40) rotatably guiding the shaft (24) of the low-pressure compressor (14).
